# EUROPEAN PATENT APPLICATION

(11) **EP 4 760 958 A1**
(43) Date of publication of application: **17.06.2026**
(21) Application number: 24938989.1
(22) Date of filing: 15.11.2024
(51) Int. Cl.: H01M 50/502, H01M 50/509, H01M 10/6556, H01M 50/507, H01M 50/258, H01M 50/289, H01M 50/249

(54) **BATTERY PACK AND VEHICLE COMPRISING SAME**

(30) Priority: 14.05.2024 KR 20240062921
(71) Applicant: LG Energy Solution, Ltd., Seoul 07335 (KR)
(72) Inventor: JO, Yong-Hyuck, Daejeon 34122 (KR); PARK, Jong-Sun, Daejeon 34122 (KR); AHN, Jun-Young, Daejeon 34122 (KR); LEE, Yong-Ho, Daejeon 34122 (KR); JEONG, Eui-Cheol, Daejeon 34122 (KR); JUNG, In-Hyuk, Daejeon 34122 (KR); CHUNG, Jae-Hun, Daejeon 34122 (KR); YANG, Jin-Oh, Daejeon 34122 (KR); SONG, Jong-Min, Daejeon 34122 (KR)
(74) Representative: Plasseraud IP
(86) International application number: PCT/KR2024/018086
(87) International publication number: WO 2025/239485

(57) **Abstract**

Disclosed is a battery pack and a vehicle including the same. The battery pack includes a plurality of battery cells; a bus bar assembly configured to electrically connect the plurality of battery cells; a frame configured to support the plurality of battery cells; and a bus bar arrangement member coupled to the frame and configured such that at least a portion of the bus bar assembly is arranged therein.

## Description

### TECHNICAL FIELD

This application is based on and claims priority from Korean Patent Application No. 10-2024-0062921, filed on May 14, 2024, with the Korean Intellectual Property Office, the disclosure of which is incorporated herein in its entirety by reference.

The present disclosure relates to a battery pack and a vehicle including the battery pack, and more particularly, to a battery pack capable of simplifying a current path and sharing a side structure, and a vehicle including the same.

### BACKGROUND ART

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. The secondary battery is drawing attentions as a new energy source for enhancing energy efficiency and environment friendliness in that the use of fossil fuels can be reduced greatly and no byproduct is generated during energy consumption.

Secondary batteries widely used at present include lithium ion batteries, lithium polymer batteries, nickel cadmium batteries, nickel hydrogen batteries, nickel zinc batteries and the like. An operating voltage of the unit secondary battery cell, namely a unit battery cell, is about 2.5V to 4.2V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Recently, medium-sized or large-sized battery packs applied to electric vehicles, etc. are configured to include a large number of battery cells with higher cell capacities in order to increase at least one of output and capacity, and these battery cells are electrically connected through bus bars.

In the case of such medium-sized or large-sized battery packs, the safety of the electrical connection structure of the bus bars may be a problem. In addition, as the number of battery cells increases, the structural connection of the bus bars becomes more complex, and thus the current path corresponding to the current flow also becomes more complex.

### DISCLOSURE

### Technical Problem

Therefore, the present disclosure is directed to providing a battery pack, which may facilitate formation of a current path in a limited space by simplifying the current path, and a vehicle including the same.

In addition, the present disclosure is directed to providing a battery pack capable of sharing a side structure so that a large number of battery cells may be aligned, and a vehicle including the same.

In addition, the present disclosure is directed to providing a battery pack, which may further increase structural rigidity through a side structure, and a vehicle including the same.

However, the technical problems that the present disclosure seeks to solve are not limited to the above, and other problems not mentioned herein will be clearly understood by those skilled in the art from the following description.

### Technical Solution

In one aspect of the present disclosure, there is provided a battery pack comprising: a plurality of battery cells; a bus bar assembly configured to electrically connect the plurality of battery cells; a frame configured to support the plurality of battery cells; and a bus bar arrangement member coupled to the frame and configured such that at least a portion of the bus bar assembly is arranged therein.

In an embodiment, the plurality of battery cells may include cell parallel units configured such that a preset number of battery cells are connected in parallel, and the bus bar assembly may be connected to the plurality of battery cells so that the plurality of cell parallel units are connected in series to form a current path so that current flows in a preset direction.

In an embodiment, the bus bar assembly may include an electrode terminal connection bus bar that connects electrode terminals of the plurality of battery cells, and the electrode terminal connection bus bar may include a positive electrode terminal connection portion configured to electrically connect positive electrode terminals of the plurality of battery cells; and a negative electrode terminal connection portion configured to extend from the positive electrode terminal connection portion and electrically connect negative electrode terminals of the plurality of battery cells.

In an embodiment, the frame may include a long side frame formed to have a long length; and a short side frame formed to have a short length, and the current path may be formed so that current flows along the long side frame and the short side frame.

In an embodiment, the long side frame may include a first long side frame and a second long side frame, the short side frame may include a first short side frame and a second short side frame, and the current path may be formed so that current moves along the first long side frame toward the first short side frame, moves along the first short side frame toward the second long side frame, and moves along the second long side frame toward the second short side frame.

In an embodiment, a cooling member may be coupled to the first short side frame.

In an embodiment, the short side frame may include a first short side frame and a second short side frame, a cooling member may be coupled to the first short side frame, and the bus bar arrangement member may be coupled to the second short side frame.

In an embodiment, the bus bar assembly may include an external terminal connection bus bar connected to an external terminal and electrically connected to the plurality of battery cells, and the external terminal connection bus bar may be coupled to the bus bar arrangement member.

In an embodiment, the bus bar arrangement member may be coupled to the frame using an adhesive or coupled to the frame by hooking.

In an embodiment, a coupling rib may be formed in the bus bar arrangement member so as to be coupled to the frame, and the adhesive is applied to the coupling rib.

In an embodiment, the frame may be provided in plurality, and the bus bar assembly may include a frame connection bus bar coupled to a first bus bar arrangement member coupled to a first frame among the plurality of frames and a second bus bar arrangement member coupled to a second frame among the plurality of frames, respectively, to electrically connect the plurality of battery cells.

In an embodiment, the plurality of frames may be stacked in a vertical direction, the first bus bar arrangement member at a lower side may include a first side and a second side that are opposed to each other, the second bus bar arrangement member at an upper side may include a third side and a fourth side that are opposed to each other, and the frame connection bus bar may connect the first side of the first bus bar arrangement member at the lower side and the fourth side of the second bus bar arrangement member at the upper side.

In an embodiment, an external terminal connection bus bar connected to an external terminal and electrically connected to the plurality of battery cells may be coupled to the second side of the first bus bar arrangement member at the lower side and the third side of the second bus bar arrangement member at the upper side.

In an embodiment, the plurality of frames may be stacked in a vertical direction, the first bus bar arrangement member at the lower side may include a first side and a second side that are opposed to each other, the second bus bar arrangement member at the upper side may include a third side and a fourth side that are opposed to each other, and the frame connection bus bar may connect the second side of the first bus bar arrangement member at the lower side and the third side of the second bus bar arrangement member at the upper side.

In an embodiment, an external terminal connection bus bar connected to an external terminal and electrically connected to the plurality of battery cells may be coupled to the first side of the first bus bar arrangement member at the lower side and the fourth side of the second bus bar arrangement member at the upper side.

In an embodiment, current paths of the first bus bar arrangement member at the lower side and the second bus bar arrangement member at the upper side may be formed by the frame connection bus bar.

In an embodiment, the frame may include at least one side structure that supports the plurality of battery cells.

Meanwhile, according to another aspect of the present disclosure, there may be provided a vehicle including at least one battery module described above.

### Advantageous Effects

The embodiments of the present disclosure have the effect of facilitating formation of a current path within a limited space by simplifying the current path.

In addition, there is an effect that enables sharing of the side structure so that a large number of battery cells may be aligned.

In addition, there is an effect of further increasing structural rigidity through the side structure.

The accompanying drawings illustrate a preferred embodiment of the present disclosure and together with the foregoing disclosure, serve to provide further understanding of the technical features of the present disclosure, and thus, the present disclosure is not construed as being limited to the drawing.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing a battery pack according to an embodiment of the present disclosure.
FIG. 2 is a plan view showing the battery pack according to an embodiment of the present disclosure.
FIG. 3 is a drawing showing that an upper frame is removed from FIG. 1.
FIG. 4 is an enlarged view showing part A of FIG. 3.
FIG. 5 is a drawing showing a current path of the battery pack according to an embodiment of the present disclosure.
FIG. 6 is an exploded perspective view of FIG. 1.
FIG. 7 is a drawing showing that a bus bar arrangement member is separated from a frame in the battery pack according to an embodiment of the present disclosure.
FIG. 8 is a perspective view showing the bus bar arrangement member in the battery pack according to an embodiment of the present disclosure.
FIG. 9 is a drawing looking along the direction of arrow B in FIG. 3.
FIG. 10 is a perspective view showing a frame connection bus bar in the battery pack according to an embodiment of the present disclosure.
FIG. 11 is a drawing for illustrating a vehicle including the battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

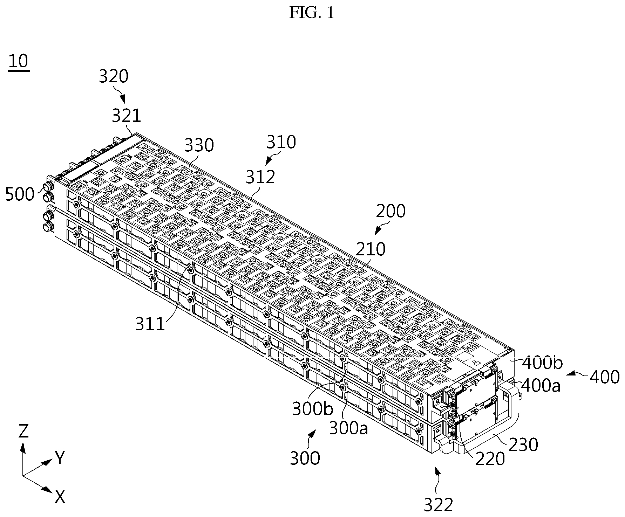

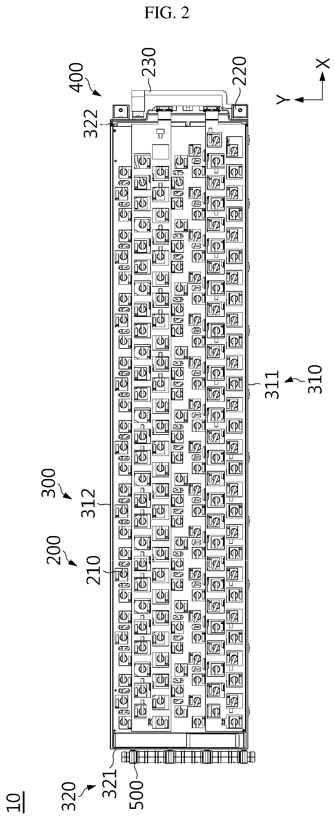

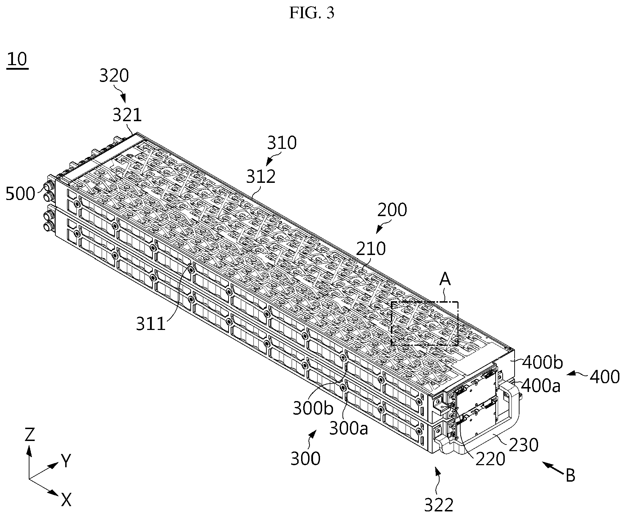

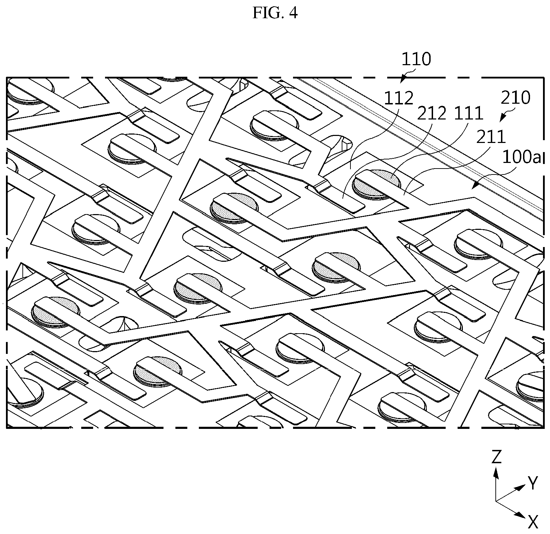

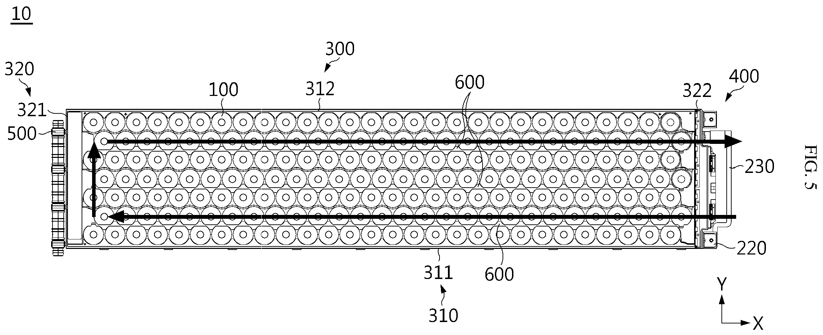

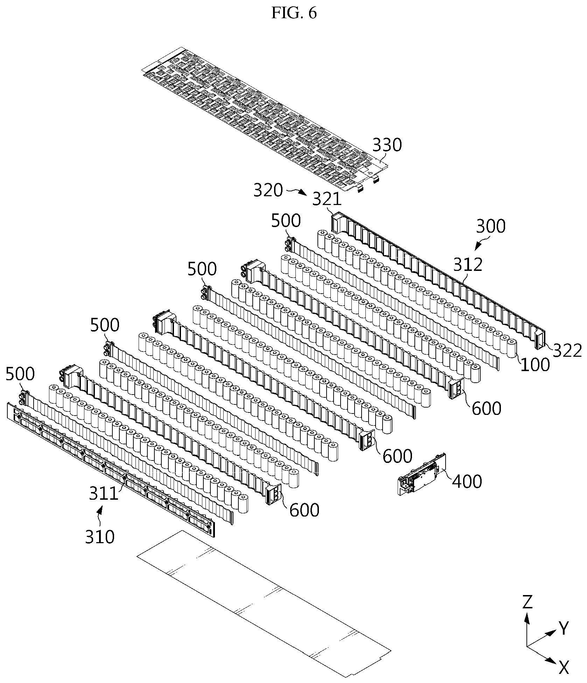

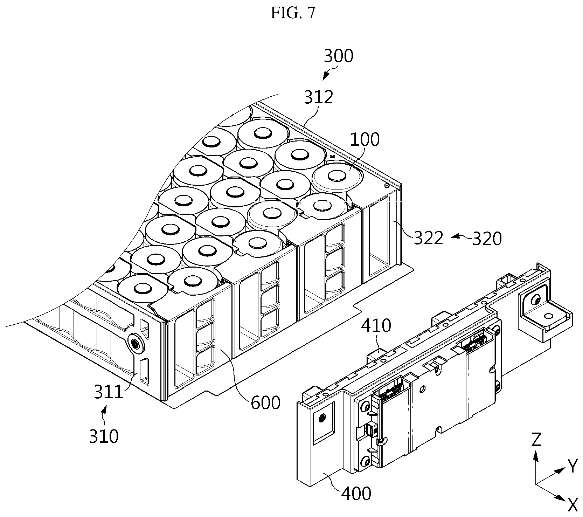

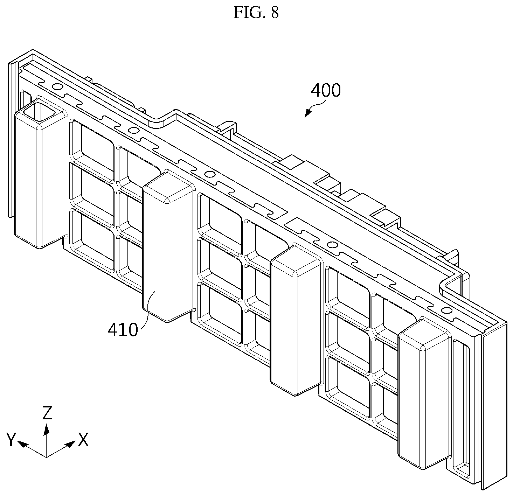

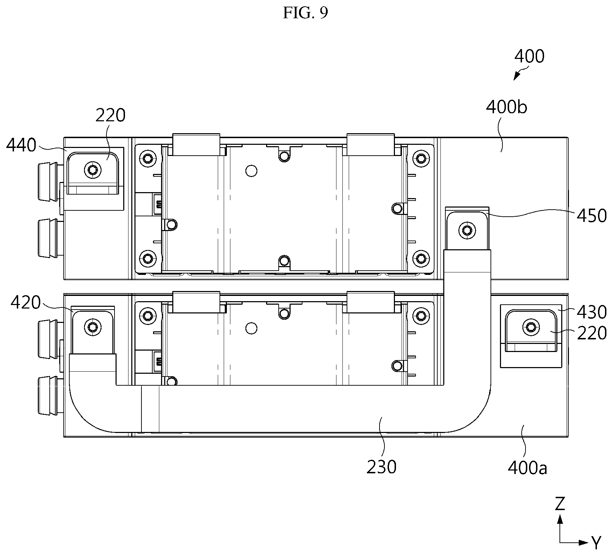

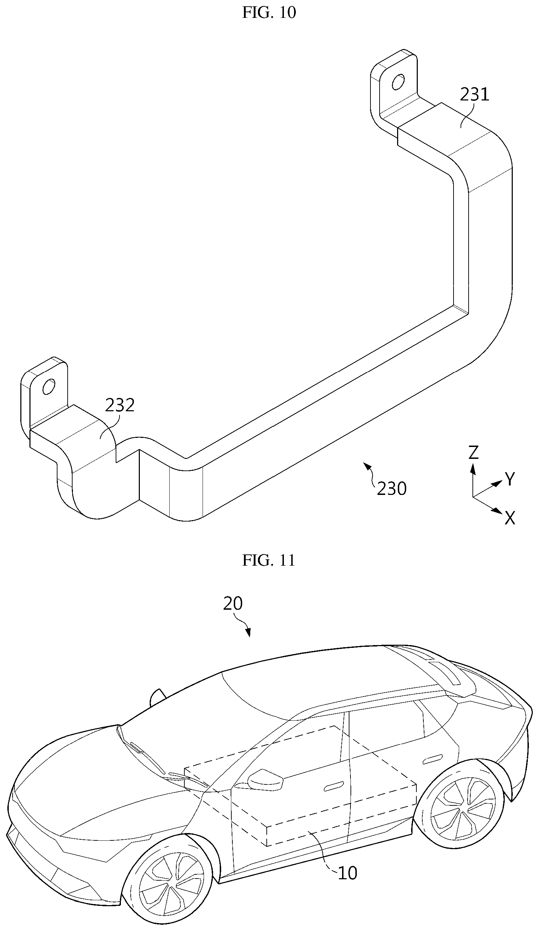

FIG. 1 is a perspective view showing a battery pack according to an embodiment of the present disclosure, FIG. 2 is a plan view showing the battery pack according to an embodiment of the present disclosure, FIG. 3 is a drawing showing that an upper frame is removed from FIG. 1, FIG. 4 is an enlarged view showing part A of FIG. 3, FIG. 5 is a drawing showing a current path of the battery pack according to an embodiment of the present disclosure, FIG. 6 is an exploded perspective view of FIG. 1, FIG. 7 is a drawing showing that a bus bar arrangement member is separated from a frame in the battery pack according to an embodiment of the present disclosure, FIG. 8 is a perspective view showing the bus bar arrangement member in the battery pack according to an embodiment of the present disclosure, FIG. 9 is a drawing looking along the direction of arrow B in FIG. 3, and FIG. 10 is a perspective view showing a frame connection bus bar in the battery pack according to an embodiment of the present disclosure.

Referring to the drawings, the battery pack 10 according to an embodiment of the present disclosure includes a battery cell 100, a bus bar assembly 200, a frame 300, and a bus bar arrangement member 400.

Referring to FIGS. 5 and 6, the battery cell 100 may be provided in plurality. Also, referring to FIGS. 3 and 4 together, the plurality of battery cells 100 may include cell parallel units 100a configured such that a preset number of battery cells 100 are connected in parallel.

Referring to FIG. 4, the cell parallel unit 100a is configured such that a plurality of battery cells 100 (six battery cells indicated in dark color in FIG. 4 are connected in parallel to form one cell parallel unit) are connected in parallel, and a plurality of cell parallel units 100a are connected in series to form a current path (see arrows in FIG. 5) so that current may flow in a preset direction. Here, the number of plurality of battery cells 100 forming the cell parallel unit 100a may be set variously and is not limited to 6.

The plurality of battery cells 100 may be diverse, and may be, for example, a cylindrical secondary battery, a pouch-shaped secondary battery, or a rectangular secondary battery. However, for convenience of explanation, the following description will focus on the case where the battery cell 100 is a cylindrical secondary battery. The plurality of battery cells 100 may be provided with a large number of battery cells 100 having a higher cell capacity to increase at least one of output and capacity for configuring a medium-sized or large-sized battery pack 10.

The cylindrical battery cell 100 may include an electrode assembly, a battery can, a positive electrode current collection plate, a positive electrode terminal 111, and a negative electrode current collection plate.

The electrode assembly includes a positive electrode plate, a negative electrode plate, and a separator, and the separator is interposed between the positive electrode plate and the negative electrode plate. In addition, the electrode assembly may be prepared in a jelly-roll type in which a center hole is formed by winding the positive electrode plate and the negative electrode plate in one direction in a state where the separator is interposed therebetween.

For example, the electrode assembly may be manufactured by winding a stack that is formed by sequentially stacking a negative electrode plate, a separator, a positive electrode plate, and a separator at least once. Here, the positive electrode plate and the negative electrode plate may be formed in a sheet shape. That is, the electrode assembly may be a wound-type electrode assembly. The electrode assembly may have a winding structure well known in the art without limitation.

A positive electrode active material is applied to one or both surfaces of the positive electrode plate, and a negative electrode active material is applied to one or both surfaces of the negative electrode plate. The positive electrode active material coated on the positive electrode plate and the negative electrode active material coated on the negative electrode plate may employ any materials without limitation as long as they are active materials known in the art.

In addition, the separator may be a porous polymer film, for example, a porous polymer film made of a polyolefin-based polymer such as an ethylene homopolymer, a propylene homopolymer, an ethylene/butene copolymer, an ethylene/hexene copolymer, an ethylene/methacrylate copolymer, etc., used alone or in a laminated manner. As another example, the separator may be a conventional porous nonwoven fabric, for example, a nonwoven fabric made of high-melting-point glass fiber, polyethylene terephthalate fiber, etc.

At least one surface of the separator may include a coating layer of inorganic particles. It is also possible that the separator itself is formed as a coating layer of inorganic particles. The particles forming the coating layer may have a structure coupled with a binder such that an interstitial volume exists between adjacent particles.

The battery can is formed in a cylindrical shape, and an electrode assembly is accommodated inside the battery can. The battery can may be electrically connected to the negative electrode plate of the electrode assembly. Here, the battery can may have the same polarity as the negative electrode plate, i.e., a negative polarity, and thus, the battery can may function as a negative electrode terminal 112. However, the present disclosure is not limited thereto.

In addition, a gap of a preset size is formed between the battery can and the electrode assembly (between the battery can and the positive electrode current collection plate, if the positive electrode current collection plate is coupled to the electrode assembly), and an insulator may be interposed in the gap. The battery can may be made of a conductive metal, such as aluminum, steel, stainless steel, etc., but is not limited thereto.

The positive electrode current collection plate is electrically connected to the positive electrode plate, and, for example, the positive electrode current collection plate may be connected to the positive electrode plate at the top of the electrode assembly.

The positive electrode terminal 111 is made of a conductive metal material and is electrically connected to the positive electrode current collection plate. In addition, the positive electrode terminal 111 is electrically connected to the positive electrode plate of the electrode assembly through the positive electrode current collection plate, thereby having a positive polarity.

The negative electrode current collection plate is electrically connected to the negative electrode plate. The negative electrode current collection plate may be made of a conductive metal material such as aluminum, steel, copper, or nickel.

The bus bar assembly 200 is configured to electrically connect the plurality of battery cells 100. The bus bar assembly 200 may be diverse and may include, for example, at least one of an electrode terminal connection bus bar 210, an external terminal connection bus bar 220, and a frame connection bus bar 230.

Referring to FIGS. 3 and 4, the electrode terminal connection bus bar 210 is configured to connect electrode terminals 110 of the plurality of battery cells 100, i.e., positive electrode terminals 11 1 and negative electrode terminals 112. As described above, in FIG. 4, the battery can acts as the negative electrode terminal 112.

Accordingly, the electrode terminal connection bus bar 210 connects the plurality of battery cells 100 to form a cell parallel unit 100a and also forms a current path.

The electrode terminal connection bus bar 210 may include a positive electrode terminal connection portion 211 and a negative electrode terminal connection portion 212. The positive electrode terminal connection portion 211 electrically connects the positive electrode terminals 111 of the plurality of battery cells 100. In addition, the negative electrode terminal connection portion 212 extends from the positive electrode terminal connection portion 211 and electrically connects the negative electrode terminals 112 of the plurality of battery cells 100.

In this way, the positive electrode terminal connection portion 211 and the negative electrode terminal connection portion 212 of the electrode terminal connection bus bar 210 may electrically connect the plurality of battery cells 100 to form a current in the shape of an arrow in FIG. 5.

In addition, referring to FIGS. 1 and 3, the external terminal connection bus bar 220 is electrically connected to an external terminal (not shown) to electrically connect the external terminal (not shown) and the battery cell 100, and is also electrically connected to the plurality of battery cells 100.

Also, referring to FIGS. 1, 3, and 9, the frame connection bus bar 230 is coupled to a first bus bar arrangement member 400a that is coupled to a first frame 300a among the plurality of frames 300 and a second bus bar arrangement member 400b that is coupled to a second frame 300b among the plurality of frames 300, respectively, to electrically connect the plurality of battery cells 100, for example, a plurality of battery cells 100 arranged on the first frame 300a and a plurality of battery cells 100 arranged on the second frame 300b. This will be explained later in detail.

Referring to FIG. 10, the frame connection bus bar 230 may be formed asymmetrically. That is, for example, the shapes or lengths of the connection terminal 231 at the right side and the connection terminal 232 at the left side may be formed differently based on the X-axis direction of FIG. 10. However, the present disclosure is not limited thereto.

Referring to FIGS. 1 and 2, the frame 300 supports the plurality of battery cells 100. Here, referring to FIG. 6, the frame 300 may include a long side frame 310 formed to be longer than the short side frame 320, and a short side frame 320 formed to be shorter than the long side frame 310. In FIG. 6, reference sign 330 indicates an upper frame.

For example, the long side frame 310 may include a first long side frame 311 and a second long side frame 312. Also, the short side frame 320 may include a first short side frame 321 and a second short side frame 322.

Also, the current path may be formed so that the current flows along the long side frame 310 and the short side frame 320. Referring to the arrows in FIG. 5, the current path may be formed so that the current moves along the first long side frame 311 toward the first short side frame 321, moves along the first short side frame 321 toward the second long side frame 312, and moves along the second long side frame 312 toward the second short side frame 322.

As described above for this current path, a plurality of battery cells 100 may form a cell parallel unit 100a by the electrode terminal connection bus bar 210, and also, a plurality of cell parallel units 100a may be connected in series.

In addition, if the current path is formed as described above, the current flow is simplified and the current path becomes easier within a limited space compared to the case where the current moves toward the first short side frame 321 while repeatedly going back and forth between the first long side frame 311 and the second long side frame 312.

Referring to FIGS. 1 and 2, the bus bar arrangement member 400 is coupled to the frame 300. At least a portion of the bus bar assembly 200 is disposed on the bus bar arrangement member 400.

The bus bar arrangement member 400 may be coupled to the frame 300 in a various ways. For example, the bus bar arrangement member 400 may be coupled to the frame 300 using an adhesive, or may be coupled to the frame 300 by hooking.

For example, referring to FIGS. 7 and 8, a coupling rib 410 may be formed on the bus bar arrangement member 400. Also, an adhesive may be applied to the coupling rib 410 so that the bus bar arrangement member 400 may be coupled to the frame 300.

However, the coupling method of the bus bar arrangement member 400 is not limited thereto.

The bus bar arrangement member 400 may be coupled only to one side of the frame 300. For example, referring to FIG. 2, the bus bar arrangement member 400 may be coupled only to the right side of the frame 300 based on the X-axis of FIG. 2. Of course, as a modified embodiment, the bus bar arrangement member 400 may also be coupled only to the left side of the frame 300 based on the X-axis of FIG. 2.

If the bus bar arrangement member 400 is coupled only to the right side of the frame 300, the plurality of battery cells 100 may be electrically connected to the left side of the frame 300 by the electrode terminal connection bus bar 210 without the bus bar arrangement member 400.

That is, the bus bar arrangement member 400 may be coupled only to the second short side frame 322. In addition, a cooling member 500 for cooling the plurality of battery cells 100 may be coupled to the first short side frame 321. Here, the cooling member 500 may be provided with cooling tubes that come into contact with the plurality of battery cells 100.

That is, since the bus bar arrangement member 400 is coupled only to one side of the frame 300, there is an advantage in that a space is provided at the other side of the frame 300 to which the cooling member 500 may be coupled. That is, in the former embodiment, a separate space for coupling the cooling member 500 is unnecessary, so space utilization is increased.

Here, referring to FIG. 1, an external terminal connection bus bar 220 may be coupled to the bus bar arrangement member 400. That is, the bus bar arrangement member 400 is coupled to the frame 300, and the external terminal connection bus bar 220 is coupled to and supported by the bus bar arrangement member 400.

Referring to FIGS. 1 and 3, the frame 300 may be provided in plurality. For example, the frame 300 may be arranged in a vertical direction, including a first frame 300a arranged at the bottom and a second frame 300b arranged at the top based on FIGS. 1 and 3.

Here, the first bus bar arrangement member 400a is coupled to the first frame 300a, and the second bus bar arrangement member 400b is coupled to the second frame 300b. Also, as described above, the frame connection bus bar 230 is coupled to the first bus bar arrangement member 400a and the second bus bar arrangement member 400b, respectively, to electrically connect the plurality of battery cells 100.

In this way, a plurality of frames (two or more frames) may be sequentially stacked, which has the advantage of increasing battery capacity while improving space utilization.

Referring to FIG. 9, the first bus bar arrangement member 400a at the lower side may include a first side 420 and a second side 430 that are opposed to each other, and the second bus bar arrangement member 400b at the upper side may include a third side 440 and a fourth side 450 that are opposed to each other. In addition, the frame connection bus bar 230 may be configured to connect the first side 420 of the first bus bar arrangement member 400a at the lower side and the fourth side 450 of the second bus bar arrangement member 400b at the upper side.

Here, an external terminal connection bus bar 220, which is connected to an external terminal (not shown) and electrically connected to the plurality of battery cells 100, may be coupled to the second side 430 of the first bus bar arrangement member 400a at the lower side and the third side 440 of the second bus bar arrangement member 400b at the upper side.

In addition, as described above, current paths of the first bus bar arrangement member 400a at the lower side and the second bus bar arrangement member 400b at the upper side may be formed by the frame connection bus bar 230. That is, a current that moves along the current path formed in a plurality of battery cells 100 provided in the second frame 300b at the upper side may move to a plurality of battery cells 100 provided in the first frame 300a at the lower side by the frame connection bus bar 230. By this manner, even if a plurality of frames (two or more frames) are stacked, a current path may be formed between the plurality of frames.

Meanwhile, although not shown in the drawings, as a modified embodiment, the first bus bar arrangement member 400a at the lower side may include a first side 420 and a second side 430 that are opposed to each other, the second bus bar arrangement member 400b at the upper side may include a third side 440 and a fourth side 450 that are opposed to each other, and the frame connection bus bar 230 may be configured to connect the second side 430 of the first bus bar arrangement member 400a at the lower side and the third side 440 of the second bus bar arrangement member 400b at the upper side.

Here, an external terminal connection bus bar 220, which is connected to an external terminal (not shown) and electrically connected to the plurality of battery cells 100, may be coupled to the first side 420 of the first bus bar arrangement member 400a at the lower side and the fourth side 450 of the second bus bar arrangement member 400b at the upper side.

Referring to FIG. 6, the frame 300 may include at least one side structure 600. The side structure 600 is arranged between the frames 300 and configured to support the plurality of battery cells 100.

If the side structure 600 are provided in plurality, the plurality of side structures 600 are formed with a preset length along the longitudinal direction of the frame 300 (along the long side frame 310) to accommodate and support the plurality of battery cells 100. An accommodation groove is formed at both sides of the side structure 600, and the plurality of battery cells 100 may be accommodated and supported in the accommodation grooves formed at both sides of the side structure 600, respectively.

In this way, if the side structure 600 is provided inside the frame 300, there is an effect of further increasing the structural rigidity even when the number of battery cells 100 increases.

In addition, there is an effect that enables sharing of the side structure 600 so that a large number of battery cells 100 can be aligned.

FIG. 11 is a drawing for illustrating a vehicle including the battery pack according to each embodiment of the present disclosure.

Referring to FIG. 11, a vehicle 20 according to an embodiment of the present disclosure may include at least one battery pack 10 according to each of the former embodiments. Here, the vehicle 20 includes various vehicles that are designed to use electricity, such as an electric vehicle or a hybrid electric vehicle, for example.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery pack and a vehicle including the same, and is particularly applicable to industries related to secondary batteries.

## Claims

1. A battery pack comprising:
a plurality of battery cells;
a bus bar assembly configured to electrically connect the plurality of battery cells;
a frame configured to support the plurality of battery cells; and
a bus bar arrangement member coupled to the frame and configured such that at least a portion of the bus bar assembly is arranged therein.

2. The battery pack according to claim 1,
wherein the plurality of battery cells include cell parallel units configured such that a preset number of battery cells are connected in parallel, and
wherein the bus bar assembly is connected to the plurality of battery cells so that the plurality of cell parallel units are connected in series to form a current path so that current flows in a preset direction.

3. The battery pack according to claim 2,
wherein the bus bar assembly includes an electrode terminal connection bus bar that connects electrode terminals of the plurality of battery cells, and
wherein the electrode terminal connection bus bar includes:
a positive electrode terminal connection portion configured to electrically connect positive electrode terminals of the plurality of battery cells; and
a negative electrode terminal connection portion configured to extend from the positive electrode terminal connection portion and electrically connect negative electrode terminals of the plurality of battery cells.

4. The battery pack according to claim 2,
wherein the frame includes:
a long side frame formed to have a long length; and
a short side frame formed to have a short length,
wherein the current path is formed so that current flows along the long side frame and the short side frame.

5. The battery pack according to claim 4,
wherein the long side frame includes a first long side frame and a second long side frame,
wherein the short side frame includes a first short side frame and a second short side frame, and
wherein the current path is formed so that current moves along the first long side frame toward the first short side frame, moves along the first short side frame toward the second long side frame, and moves along the second long side frame toward the second short side frame.

6. The battery pack according to claim 5,
wherein a cooling member is coupled to the first short side frame.

7. The battery pack according to claim 4,
wherein the short side frame includes a first short side frame and a second short side frame,
wherein a cooling member is coupled to the first short side frame, and
wherein the bus bar arrangement member is coupled to the second short side frame.

8. The battery pack according to claim 7,
wherein the bus bar assembly includes an external terminal connection bus bar connected to an external terminal and electrically connected to the plurality of battery cells, and
wherein the external terminal connection bus bar is coupled to the bus bar arrangement member.

9. The battery pack according to claim 1,
wherein the bus bar arrangement member is coupled to the frame using an adhesive or coupled to the frame by hooking.

10. The battery pack according to claim 9,
wherein a coupling rib is formed in the bus bar arrangement member so as to be coupled to the frame, and the adhesive is applied to the coupling rib.

11. The battery pack according to claim 1,
wherein the frame is provided in plurality, and
wherein the bus bar assembly includes a frame connection bus bar coupled to a first bus bar arrangement member coupled to a first frame among the plurality of frames and a second bus bar arrangement member coupled to a second frame among the plurality of frames, respectively, to electrically connect the plurality of battery cells.

12. The battery pack according to claim 11,
wherein the plurality of frames are stacked in a vertical direction,
wherein the first bus bar arrangement member at a lower side includes a first side and a second side that are opposed to each other,
wherein the second bus bar arrangement member at an upper side includes a third side and a fourth side that are opposed to each other, and
wherein the frame connection bus bar connects the first side of the first bus bar arrangement member at the lower side and the fourth side of the second bus bar arrangement member at the upper side.

13. The battery pack according to claim 12,
wherein an external terminal connection bus bar connected to an external terminal and electrically connected to the plurality of battery cells is coupled to the second side of the first bus bar arrangement member at the lower side and the third side of the second bus bar arrangement member at the upper side.

14. The battery pack according to claim 11,
wherein the plurality of frames are stacked in a vertical direction,
wherein the first bus bar arrangement member at the lower side includes a first side and a second side that are opposed to each other,
wherein the second bus bar arrangement member at the upper side includes a third side and a fourth side that are opposed to each other, and
wherein the frame connection bus bar connects the second side of the first bus bar arrangement member at the lower side and the third side of the second bus bar arrangement member at the upper side.

15. The battery pack according to claim 14,
wherein an external terminal connection bus bar connected to an external terminal and electrically connected to the plurality of battery cells is coupled to the first side of the first bus bar arrangement member at the lower side and the fourth side of the second bus bar arrangement member at the upper side.

16. The battery pack according to claim 11,
wherein current paths of the first bus bar arrangement member at the lower side and the second bus bar arrangement member at the upper side are formed by the frame connection bus bar.

17. The battery pack according to claim 1,
wherein the frame includes at least one side structure that supports the plurality of battery cells.

18. A vehicle comprising at least one battery pack according to any one of claims 1 to 17.
